(19) Europäisches Patentamt
European Patent Office
Office européen des brevets

(11) **EP 3 754 083 B1**

(12) **EUROPEAN PATENT SPECIFICATION**

(45) Date of publication and mention
of the grant of the patent:
**28.09.2022 Bulletin 2022/39**

(21) Application number: **19754009.9**

(22) Date of filing: **25.01.2019**

(51) International Patent Classification (IPC):
**B01D 39/16** (2006.01)    **D04H 3/147** (2012.01)

(52) Cooperative Patent Classification (CPC):
**D04H 3/16; B01D 39/163; D04H 3/007;**
**D04H 3/147;** B01D 2239/0216; B01D 2239/0435;
B01D 2239/0622; B01D 2239/0627;
B01D 2239/0654; B01D 2239/0681;
B01D 2239/1233

(86) International application number:
**PCT/JP2019/002494**

(87) International publication number:
**WO 2019/159654 (22.08.2019 Gazette 2019/34)**

(54) **NONWOVEN FABRIC AND AIR-FILTER FILTERING MATERIAL USING SAME**

VLIESSTOFF UND LUFTFILTERMATERIAL DAMIT

TISSU NON TISSÉ ET MATÉRIAU DE FILTRATION POUR FILTRE À AIR L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2018   JP 2018024685**

(43) Date of publication of application:
**23.12.2020   Bulletin 2020/52**

(73) Proprietor: **Toray Industries, Inc.**
**Tokyo, 103-8666 (JP)**

(72) Inventors:
• **HAYASHI, Shingo**
**Otsu-shi, Shiga 520-8558 (JP)**
• **INABA, Sachio**
**Otsu-shi, Shiga 520-8558 (JP)**
• **HANE, Ryoichi**
**Otsu-shi, Shiga 520-8558 (JP)**

(74) Representative: **Mewburn Ellis LLP**
**Aurora Building**
**Counterslip**
**Bristol BS1 6BX (GB)**

(56) References cited:
**EP-A1- 3 121 314      WO-A1-03/006735
JP-A- H05 209 354      JP-A- 2002 533 195
US-A- 5 811 045**

**Description**

TECHNICAL FIELD

The present invention relates to a melt-blown nonwoven fabric. More specifically, the present invention relates to an electret nonwoven fabric excellent in air permeability, and a filter material including the electret nonwoven fabric and suitably used in an air filter.

BACKGROUND ART

Air filters have conventionally been used to remove pollen, dust, and the like in gases, and nonwoven fabrics have often been used as a filter material for the air filters.

Performance required of air filters includes a capability of collecting a large amount of micro dust, that is, high collection efficiency, and low resistance during passage of gases through the inside of the air filters, that is, low pressure loss. In order to obtain a filter material having high collection efficiency as described above, it is suitable that the single fibers that constitute the nonwoven fabric are thin. If the single fibers are thinned, however, the nonwoven fabric made of the single fibers may become easy to collapse, and the increased fiber density of the nonwoven fabric may increase the pressure loss.

Alternatively, in order to obtain a filter material having low pressure loss, it is suitable that the single fibers that constitute the nonwoven fabric are thick. If the single fibers are thickened, however, the fiber surface area in the nonwoven fabric may decrease and lower the collection efficiency. As described above, in conventional techniques, high collection efficiency and low pressure loss in the performance required of air filters are in a trade-off relationship.

As a method for solving the above-mentioned problems, an attempt has been made to subject a nonwoven fabric to electret treatment to utilize an electrostatic action in addition to a physical action so that high collection efficiency and low pressure loss may be simultaneously satisfied.

For example, there has been proposed a method for producing an electret fiber sheet, the method including applying a high voltage with a non-contact type application electrode to a nonwoven fabric being in contact with an earth electrode while moving the nonwoven fabric and the earth electrode together to continuously subject the nonwoven fabric to electret treatment (see Patent Document 1). In addition, a so-called hydrocharging method is proposed as a method for charging fibers by contact with water. There are hydrocharging methods such as a method of spraying jets of water or stream of water droplets onto a fiber sheet at a pressure sufficient for allowing water to penetrate into the nonwoven fabric to subject the fiber sheet to electret treatment so that positive and negative charges may be uniformly distributed (see Patent Document 2), and a method of allowing a fiber sheet to pass over a slit-shaped nozzle and sucking water with the nozzle to impregnate the fiber sheet with water so that positive and negative charges may be uniformly distributed (see Patent Document 3).

In addition to the above, there has also been proposed a heat-resistant electret material. The heat-resistant electret material includes a nonwoven fabric including fibers that contain a high molecular weight polymer and at least one stabilizer selected from hindered amine, nitrogen-containing hindered phenol, metal salt hindered phenol, and phenol stabilizers blended in the high molecular weight polymer, and has an amount of trapped electric charge as determined from the thermally stimulated depolarization current at a temperature of 100°C or more of $2.0 \times 10^{-10}$ coulombs/cm$^2$ or more (see Patent Document 4) .

Further, there has also been proposed a method in which a nonwoven fabric that includes a mixture of thin fibers and thick fibers is formed so that clogging with particles may be less likely to occur, and in which the nonwoven fabric has increased voids between fibers so that an increase of the pressure loss may be suppressed (see Patent Documents 5 and 6).

Moreover, there has also been proposed a method of obtaining a bulky and highly air-permeable nonwoven fabric by subjecting propylene-based polymers different in the melt flow rate (MFR) to "side-by-side" or "eccentric core-sheath" composite spinning to produce crimped fibers (Patent Document 7). Patent Document 8 concerns spunbond nonwoven fabrics composed of side-by-side composite fibers having crimps. Patent Document 9 concerns a process for making a helically crimped conjugate fiber from first and second polymeric compositions wherein the degree of latent helical crimp is controlled by selective addition of a nucleating agent to at least one of the compositions. Meltblown nonwovens for producing electret articles are disclosed in Patent Documents 9 and 10. Neither of these documents discloses meltblowns comprising bicomponent fibers.

PRIOR ART PATENT DOCUMENTS

Patent Document 1: JP 61-289177 A
Patent Document 2: US Patent No. 6,119,691
Patent Document 3: JP 2003-3367 A
Patent Document 4: JP 63-280408 A
Patent Document 5: JP 10-46460 A
Patent Document 6: JP 2006-37295 A
Patent Document 7: WO 2015/141750
Patent Document 8: JP H05 209354 A
Patent Document 9: US 5811045 A
Patent Document 10: EP 1 403 41
Patent Document 11: WO 00/00267

SUMMARY OF THE INVENTION

PROBLEMS TO BE SOLVED BY THE INVENTION

Although the electret treatment of the nonwoven fabric as in the proposals described in Patent Documents 1 to 4 can improve the collection efficiency to some extent while maintaining low pressure loss, such effect is insufficient under the current situation in which there are increasing needs for a filter having still lower pressure loss.

In addition, although the mixture of thin fibers and thick fibers or the use of crimped fibers may increase voids between fibers to provide a nonwoven fabric having low pressure loss as in the proposals described in Patent Documents 5 to 7, the obtained nonwoven fabric has low collection efficiency because thick fibers may be partially mixed due to the use of resins different in the melt flow rate extruded from spinnerets different in the hole diameter.

In addition, even if a nonwoven fabric made of thin fibers and suppressed in fusion between fibers is obtained, the nonwoven fabric has extremely low strength and is not suitable for practical use due to concerns about the process passability in post-processing.

In view of the above-mentioned problems, an object of the present invention is to provide a nonwoven fabric having high collection efficiency and low pressure loss and further having high strength.

SOLUTIONS TO THE PROBLEMS

The present invention is intended to solve the above-mentioned problems, and the nonwoven fabric of the present invention is a melt-blown nonwoven fabric including a constituent fiber containing a thermoplastic resin, the constituent fiber containing at least a first component and a second component, either one or both of the first component and the second component containing a crystal nucleating agent, the first component and the second component having a difference in crystallization start temperature of 5°C or more, at least part of both the first component and the second component being exposed to a surface of the constituent fiber. According to a preferred aspect of the nonwoven fabric of the present invention, at least one of the first component and the second component contains polypropylene as a main component.

According to a preferred aspect of the nonwoven fabric of the present invention, both the first component and the second component contain polypropylene as a main component.

According to a preferred aspect of the nonwoven fabric of the present invention, the first component and the second component contain identical polypropylene as a main component.

According to a preferred aspect of the nonwoven fabric of the present invention, the nonwoven fabric has a concentration of the crystal nucleating agent contained in the first component or the second component of 0.001 to 1 wt%.

According to a preferred aspect of the nonwoven fabric of the present invention, the nonwoven fabric is electret-treated.

Further, the present invention relates to an air filter material including the above-mentioned nonwoven fabric.

EFFECTS OF THE INVENTION

According to the present invention, the fibers that constitute the nonwoven fabric can be thin fibers, the fusion between fibers can be controlled, and it is possible to provide an electret nonwoven fabric having high collection efficiency and low pressure loss and further having high strength.

BRIEF DESCRIPTION OF THE DRAWING

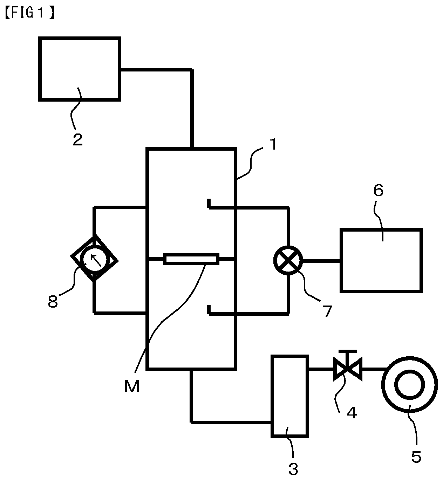

Fig. 1 is a schematic side view showing a device for measuring the collection efficiency and the pressure loss.

EMBODIMENTS OF THE INVENTION

The nonwoven fabric of the present invention is a nonwoven fabric including a constituent fiber containing a thermoplastic resin, the constituent fiber containing at least a first component and a second component, either one or both of the first component and the second component containing a crystal nucleating agent, the first component and the second component having a difference in crystallization start temperature of 5°C or more, at least part of both the first component and the second component being exposed to a surface of the constituent fiber. The fibers that constitute the nonwoven fabric of the present invention contain a thermoplastic resin, and contain at least the first component and the second component. Herein, the "component" is a resin composition containing a thermoplastic resin, and there are cases where the component contains a thermoplastic resin alone and where the component contains a thermoplastic resin and additives. Each fiber that constitutes the nonwoven fabric of the present invention contains two or more different resin compositions. When the fiber contains two resin compositions, the resin compositions are referred to as the "first component" and the "second component", and when the fiber contains three or more resin compositions, two resin compositions having lower crystallization start temperatures are referred to as the "first component" and the "second component". In each fiber that constitutes the nonwoven fabric of the present invention, it is necessary that at least part of both the first component and the second component be exposed.

In a preferred aspect of the nonwoven fabric of the present invention, the constituent fiber contains a thermoplastic resin, and the constituent fiber mainly contains a non-conductive fiber. The "non-conductive" fiber referred to herein preferably has a volume resistivity of $10^{12}$ ($\Omega \cdot cm$) or more. In a more preferred aspect, the volume resistivity is $10^{14}$ ($\Omega \cdot cm$) or more.

The wording "mainly contain a non-conductive fiber" means that the nonwoven fabric contains 90 mass% or more of a non-conductive fiber. The content of the non-conductive fiber is preferably 95 mass% or more, more preferably 97 mass% or more. If the content of the non-conductive fiber in the nonwoven fabric is less than 90 mass%, when, for example, the nonwoven fabric is subjected to electret treatment, sufficient electret performance may not be achieved.

Examples of the fiber material of the non-conductive fiber include polyolefin resins such as polyethylene and polypropylene, polyester resins such as polyethylene terephthalate, polytrimethylene terephthalate, polybutylene terephthalate, and polylactic acid, polycarbonate resins, polystyrene resins, polyphenylene sulfide resins, fluororesins, elastomers such as polystyrene elastomers, polyolefin elastomers, polyester elastomers, polyamide elastomers, and polyurethane elastomers, and resins containing copolymers or mixtures of the above-mentioned compounds.

Among them, polyolefin resins are preferably used. Since polyolefin resins have high volume resistivity and low water absorption, an electret-treated nonwoven fabric may have high chargeability and high charge retention properties. Therefore, the nonwoven fabric can achieve high collection efficiency by these effects.

Examples of the polyolefin resin include homopolymers of polyethylene, polypropylene, polybutene, and polymethylpentene. Moreover, resins such as copolymers obtained by copolymerizing these homopolymers with different components, and polymer blends of two or more different polymers can also be used. Among them, polypropylene resins and polymethylpentene are preferably used from the viewpoint of charge retention properties. Further, polypropylene resins are preferably used from the viewpoint that they can be used at low cost and that they can easily reduce the fiber diameter.

Each fiber that constitutes the nonwoven fabric of the present invention is characterized in that it contains the first component and the second component and that at least part of each of the first component and the second component is exposed to the fiber surface. Examples of fiber structures having such characteristics include a side-by-side structure, an eccentric core-sheath structure, a split structure, a sea-island structure, and an alloy structure (a structure in which one component is dispersed in the other component and exposed to the surface). Among them, the side-by-side structure is preferable because the first component and the second component can be easily exposed to the fiber surface. From the viewpoint of controlling the fusion between fibers described later, the percentages of exposure of the first component and the second component are both preferably 10% or more based on the fiber surface area.

The first component and the second component contained in the fibers that constitute the nonwoven fabric of the present invention have a difference in crystallization start temperature of 5°C or more. When the first component and the second component have a difference in crystallization start temperature of 5°C or more, it is possible to control the fusion between fibers. Specifically, the thermoplastic resin exposed to the fiber surface and having a lower crystallization start temperature promotes the fusion between fibers to increase the strength of the nonwoven fabric, while the thermoplastic resin exposed to the fiber surface and having a higher crystallization temperature inhibits the fusion between fibers to provide a bulky and highly air-permeable nonwoven fabric. If the difference in crystallization temperature between the first component and the second component is too large, it would be necessary to set the spinning temperature in conformity with the higher crystallization start temperature, and the resin having the lower crystallization start temperature may be deteriorated. Therefore, it is preferable that the difference in crystallization start temperature be 100°C or less.

As a technique for providing a difference in crystallization start temperature of 5°C or more, in a preferred aspect, a crystal nucleating agent is added in an amount of 0.001 to 1.0 mass%, preferably 0.005 to 0.5 mass% to either one or both of the first component and the second component that constitute the fibers. Addition of the crystal nucleating agent in the above-mentioned mass percentage makes it possible to provide a difference in crystallization start temperature of 5°C or more regardless of whether the thermoplastic resins as the main components of the first component and the second component that constitute the fibers are identical or different.

Herein, the content can be determined, for example, as follows. A nonwoven fabric is subjected to Soxhlet extraction with a methanol/chloroform mixed solution, then the resulting extract is repeatedly subjected to preparative HPLC, and the resulting fractions are subjected to IR measurement, GC measurement, GC/MS measurement, MALDI-MS measurement, $^1$H-NMR measurement, and $^{13}$C-NMR measurement to confirm the structure. The masses of the fractions containing a crystal nucleating agent are summed up, and the percentage of the obtained total mass in the entire nonwoven fabric is determined and defined as the content of the crystal nucleating agent.

If the content of the crystal nucleating agent is less than 0.001 mass%, the fusion between fibers cannot be sufficiently inhibited, and the rate of increase of the air permeability is small. Meanwhile, if the content of the crystal nucleating agent exceeds 1.0 mass%, spinnability may be deteriorated, and there may be a disadvantage in terms of cost.

Examples of the crystal nucleating agent include sorbitol nucleating agents, nonitol nucleating agents, xylitol nucleating agents, phosphate nucleating agents, triaminobenzene derivative nucleating agents, and metal carboxylate nucleating agents.

Examples of the sorbitol nucleating agent include dibenzylidene sorbitol (DBS), monomethyldibenzylidene sorbitol (for example, 1,3:2,4-bis(p-methylbenzylidene)sorbitol (p-MDBS)), and dimethyldibenzylidene sorbitol (for example, 1,3:2,4-bis(3,4-dimethylbenzylidene)sorbitol (3,4-DMDBS)), and "Millad" (registered trademark) 3988 (manufactured by Milliken & Company), "GEL ALL" (registered trademark) E-200 (manufactured by New Japan Chemical Co., Ltd.) and the like can be mentioned.

Examples of the nonitol nucleating agent include 1,2,3-trideoxy-4,6:5,7-bis-[(4-propylphenyl)methylene]-nonitol, and "Millad" (registered trademark) NX8000 (manufactured by Milliken & Company) and the like can be mentioned.

Examples of the xylitol nucleating agent include bis-1,3:2,4-(5',6',7',8'-tetrahydro-2-naphthaldehydebenzylidene) 1-allylxylitol. Examples of the phosphate nucleating agent include aluminum-bis(4,4',6,6'-tetra-tert-butyl-2,2'-methylenediphenyl-phosphate)-hydroxide, and "ADK STAB" (registered trademark) NA-11 (manufactured by ADEKA CORPORATION), "ADK STAB" (registered trademark) NA-21 (manufactured by ADEKA CORPORATION) and the like can be mentioned.

Examples of the triaminobenzene derivative nucleating agent include 1,3,5-tris(2,2-dimethylpropanamide)benzene, and "Irgaclear" (registered trademark) XT386 (manufactured by BASF Japan Ltd.) and the like can be mentioned. Further, examples of the metal carboxylate nucleating agent include sodium benzoate and calcium 1,2-cyclohexanedicarboxylate.

The thermoplastic resins as the main components of the first component and the second component contained in the nonwoven fabric of the present invention may be identical as described above, may be of the same type and different in the melt flow rate (MFR) or the like, or may be different thermoplastic resins. Above all, from the viewpoint of chargeability, charge retention properties, and reduction of the fiber diameter of the electret-treated nonwoven fabric as well as cost, it is preferable that one of the first component and the second component contain polypropylene as a main component. It is more preferable that both the first component and the second component be polypropylene, and it is preferable that the first component and the second component be identical polypropylene. The wording "being the main components of the first component and the second component contained in the nonwoven fabric" means that the contents of the thermoplastic resins are each 90 mass% or more in the first component or the second component. The contents of the thermoplastic resins are preferably 95 mass% or more, more preferably 97 mass% or more.

In the nonwoven fabric of the present invention, the mass ratio between the first component and the second component contained in each constituent fiber can be arbitrarily set in order to achieve desired characteristics, and the mass ratio can be usually adjusted within the range of 9 : 1 to 1 : 9.

The nonwoven fabric of the present invention is preferably made of long fibers having an average single fiber diameter of 0.1 to 15.0 μm. The average single fiber diameter is more preferably 0.3 to 7.0 μm, still more preferably 0.5 to 5.0 μm. In this case, a nonwoven fabric excellent in air permeability and collection efficiency can be easily obtained. If the average single fiber diameter is less than 0.1 μm, voids in the nonwoven fabric may not expand and sufficient air permeability may not be achieved. Conversely, if the average single fiber diameter exceeds 15.0 μm, the nonwoven fabric may have a decreased fiber surface area, and an air filter material including the nonwoven fabric may not have sufficient collection efficiency.

Further, the nonwoven fabric of the present invention preferably has a basis weight within the range of 3 to 100 g/m$^2$. The basis weight is 3 to 100 g/m$^2$, preferably 5 to 70 g/m$^2$, more preferably 10 to 50 g/m$^2$. In this case, a nonwoven fabric excellent in air permeability and collection efficiency can be easily obtained.

The nonwoven fabric of the present invention may contain, in addition to the above-mentioned crystal nucleating agent, additives such as heat stabilizers, weathering agents, and polymerization inhibitors. In a preferred aspect, from the viewpoint of improving the chargeability and charge retention properties of the electret-treated nonwoven fabric, the fiber material contains at least one hindered amine additive and/or triazine additive.

Examples of the hindered amine compound include poly[(6-(1,1,3,3-tetramethylbutyl)imino-1,3,5-triazin-2,4-diyl)((2,2,6,6-tetramethyl-4-piperidyl)imino)hexamethylene((2,2,6,6-tetramethyl-4-piperidyl)imino)] ("CHIMASSORB" (registered trademark) 944LD manufactured by BASF Japan Ltd.), dimethyl succinate-1-(2-hydroxyethyl)-4-hydroxy-2,2,6,6-tetramethylpiperidine polycondensate ("TINUVIN" (registered trademark) 622LD manufactured by BASF Japan Ltd.), and bis(1,2,2,6,6-pentamethyl-4-piperidyl) 2-(3,5-di-t-butyl-4-hydroxybenzyl)-2-n-butylmalonate ("TINUVIN" (registered trademark) 144 manufactured by BASF Japan Ltd.).

Examples of the triazine additive include poly[(6-(1,1,3,3-tetramethylbutyl)imino-1,3,5-triazin-2,4-diyl)((2,2,6,6-tetramethyl-4-piperidyl)imino)hexamethylene((2,2,6,6-tetramethyl-4-piperidyl)imino)] ("CHIMASSORB" (registered trademark) 944LD manufactured by BASF Japan Ltd.) and 2-(4,6-diphenyl-1,3,5-triazin-2-yl)-5-((hexyl)oxy)-phenol ("TINUVIN" (registered trademark) 1577FF manufactured by BASF Japan Ltd.).

The amount of the hindered amine additive and/or triazine additive is preferably 0.5 to 5 mass%, more preferably 0.7 to 3 mass% based on the mass of the nonwoven fabric. The amount within the above-mentioned range may easily provide an electret-treated nonwoven fabric having excellent collection efficiency.

In the following, a method for producing the nonwoven fabric of the present invention will be described.

The nonwoven fabric of the present invention can be produced, for example, by the following method.

First, different thermoplastic resins (thermoplastic resin compositions) that constitute fibers are prepared. Two of these resins or resin compositions are used as the first component and the second component. As described above, each of the thermoplastic resins (thermoplastic resin compositions) may be one thermoplastic resin alone or a uniform mixture of a plurality of thermoplastic resins, and additives such as crystal nucleating agents, heat stabilizers, weathering agents, and polymerization inhibitors may be added to the thermoplastic resin. Note, however, that at least one thermoplastic resin composition contains a crystal nucleating agent. The method for mixing the resins and the method for mixing the additives are not particularly limited, and a known technique may be used. Examples of a method of kneading the thermoplastic resin material and the additives include a method of supplying a mixture of the thermoplastic resin material and the additives to an extruder hopper of a spinning machine, kneading the mixture in the extruder, and directly supplying the mixture to a spinneret, and a method of kneading the thermoplastic resin material and the additives with a kneading extruder or a static kneading machine in advance to produce a master chip.

More specifically, for example, first, a thermoplastic resin material as a first component is melted in a first extruder and supplied to a spinneret. Then, a thermoplastic resin material and a crystal nucleating agent are kneaded as a second component, then melted in a second extruder, and supplied to the spinneret. The first component and the second component are mixed in the spinneret, then fibers are produced, and a nonwoven fabric is produced. A method for producing the nonwoven fabric may be a conventionally known technique, and a melt blowing method is used. In particular, the melt blowing method does not require complicated steps, can easily provide thin fibers of several micrometers, and can facilitate the achievement of high collection efficiency. Then, the nonwoven fabric can be subjected to electret treatment. The electret treatment can be applied to a single layer of the nonwoven fabric or a laminated nonwoven fabric that is a laminate of the nonwoven fabric with other sheets.

A method of subjecting the nonwoven fabric of the present invention to electret treatment may be, for example, a method described in Patent Document 1 (Japanese Patent Laid-open Publication No. 61-289177), Patent Document 2 (US Patent No. 6,119,691), or Patent Document 3 (Japanese Patent Laid-open Publication No. 2003-3367).

The air filter material of the present invention includes the nonwoven fabric of the present invention. Examples of a method of obtaining the air filter material of the present invention from the nonwoven fabric of the present invention include a method of bonding the nonwoven fabric with a sheet having higher rigidity than the nonwoven fabric does by a spraying method of spraying a moisture-curable urethane resin or the like, and a method of bonding the nonwoven fabric with such a sheet through a heat path by spraying a thermoplastic resin or a heat-fusible fiber (for example, the method described in Japanese Patent Laid-open Publication No. 2004-82109).

The air filter material of the present invention is suitable for air filters in general, especially high-performance applications of air conditioner filters, air purifier filters, and car cabin filters.

EXAMPLES

In the following, the present invention will be specifically described with reference to examples. However, the present invention is not limited only to these examples.

(1) Basis weight of nonwoven fabric:
The mass of a sample of a melt-blown nonwoven fabric measuring 15 cm in length and 15 cm in width was measured. The obtained value was converted to a value per 1 m$^2$ and rounded off to the closest whole number to calculate the

basis weight (g/m$^2$) of the nonwoven fabric.

(2) Average single fiber diameter:

As for the average single fiber diameter of a nonwoven fabric, 15 measurement samples each measuring 3 mm × 3 mm were collected from the nonwoven fabric at 15 points in total, that is, 3 points in the width direction (2 points at side edges and 1 point at the center) of the nonwoven fabric by 5 points at every 5 cm in the longitudinal direction thereof. Then, the magnification of a scanning electron microscope was adjusted to 1000 to 3000 times, and one fiber surface photograph per the collected measurement sample, that is, 10 photographs in total were taken. As for fibers in the photographs for which the fiber diameter (single fiber diameter) can be clearly confirmed, the single fiber diameter was measured, and the average of the measured fiber diameters was rounded off to one decimal place to calculate the average single fiber diameter.

(3) Air permeability of nonwoven fabric:

The air permeability of a nonwoven fabric was measured at 3 points using Air Permeability Tester (FX3300 manufactured by TEXTEST AG) under the conditions of a measurement pressure of 125 Pa and a measurement area of 38 cm$^2$, and the average of the measured air permeabilities was rounded off to one decimal place to calculate the air permeability (cc/cm$^2$/sec).

(4) Crystallization start temperature:

A nonwoven fabric was subjected to the measurement using a differential scanning calorimeter (Q1000 manufactured by TA Instruments Japan Inc.) under the following conditions, and the exothermic peak onset temperature in the cooling process was defined as the crystallization start temperature that is intended for the measurement.

• Measurement atmosphere: nitrogen flow (50 ml/min)
• Temperature range: -50 to 200°C
• Cooling rate: 10°C/min
• Amount of specimen: 5 mg

(5) Tensile strength (N/5 cm):

According to JIS L1906, specimens each measuring 5 cm in width and 30 cm in length were cut from the center of width of a nonwoven fabric at 4 points in total, that is, 2 points in the width direction of the nonwoven fabric by 2 points in the longitudinal direction thereof. The tensile strength was measured and determined using a tensile tester at a grip distance of 20 cm and a tensile speed of 10 cm/min.

(6) Collection efficiency:

At three positions in the length direction of a nonwoven fabric, one measurement sample measuring 15 cm in length and 15 cm in width was collected (three samples in total), and the samples were subjected to the measurement of collection efficiency using the collection efficiency measuring device shown in Fig. 1. In the collection efficiency measuring device shown in Fig. 1, to an upstream side of a sample holder 1 in which a measurement sample M is placed, a dust storage box 2 is connected, and to a downstream side of the sample holder 1, a flow meter 3, a flow control valve 4, and a blower 5 are connected. A particle counter 6 may be used for the sample holder 1 to count the number of dust particles on the upstream side of the measurement sample M and on the downstream side thereof using a switching cock 7.

In the measurement of the collection efficiency, a 10% solution of polystyrene 0.309U (manufactured by Nacalai Tesque, Inc.) was diluted 200 times with distilled water and filled in the dust storage box 2. Then, the measurement sample M was placed in the sample holder 1, the air volume was adjusted with the flow control valve 4 so that the filter passage speed may be 4.5 m/min, and the dust concentration of particles having a particle size of 0.3 to 0.5 μm was stabilized within the range of 10,000 to 40,000/2.83 × 10$^{-4}$ m$^3$ (0.01 ft$^3$). The number D of dust particles at the upstream of the measurement sample M and the number d of dust particles at the downstream thereof were measured with the particle counter 6 (KC-01D manufactured by RION Co., Ltd.) three times per one measurement sample, and the collection efficiency (%) to collect particles of 0.3 to 0.5 μm was determined according to JIS K 0901(1991) "Form, size and performance testing methods of filtration media for collecting airborne particulate matters" using the following calculation formula. The average of the three measurement samples was calculated and rounded off to one decimal place to calculate the final collection efficiency (%).

$$\text{Collection efficiency (\%)} = [1 - (d/D)] \times 100$$

(In the formula, d represents the total number of dust particles of the three measurements at the downstream, and D represents the total number of dust particles of the three measurements at the upstream.)

(Melt-blown nonwoven fabric)

[Example 1]

As a raw material of the thermoplastic resin of the first component, a resin containing a polypropylene resin having a melt flow rate of 850 g/10 min and 1 mass% of a hindered amine compound "CHIMASSORB" (registered trademark) 944 (manufactured by BASF Japan Ltd.) was used. As the second component, a resin containing the above-mentioned resin and 0.03 mass% of a crystal nucleating agent "Irgaclear" (registered trademark) XT386 (manufactured by BASF Japan Ltd.) was used.

The resins of the first component and the second component were charged into raw material hoppers of first and second extruders, respectively, discharged from a side-by-side spinneret at a mass ratio of the first component to the second component of 8 : 2, and injected by a melt blowing method under the conditions of a nozzle temperature of 275°C, an air temperature of 300°C, and an air pressure of 0.16 MPa to produce fibers. The produced fibers were collected and the conveyor speed was adjusted to produce a melt-blown nonwoven fabric having a basis weight of 25 g/m$^2$.

The melt-blown nonwoven fabric was subjected to electret treatment to produce an electret nonwoven fabric. Measured values and calculated values of the electret nonwoven fabric are shown in Table 1.

[Example 2]

An electret nonwoven fabric was obtained in the same manner as in Example 1 except that the resins of the first component and the second component used in Example 1 were charged into raw material hoppers of the second and first extruders, respectively, and that the first component and the second component were discharged at a mass ratio of 2 : 8.

The obtained electret nonwoven fabric was subjected to the measurement of characteristic values. The obtained results are shown in Table 1.

[Example 3]

An electret nonwoven fabric was obtained in the same manner as in Example 1 except that the crystal nucleating agent in the resin of the second component used in Example 1 was changed to "ADK STAB" (registered trademark) NA-21 (manufactured by ADEKA CORPORATION), and that the content of the crystal nucleating agent was changed to 0.3 mass%.

The obtained electret nonwoven fabric was subjected to the measurement of characteristic values. The obtained results are shown in Table 1.

[Example 4]

An electret nonwoven fabric was obtained in the same manner as in Example 3 except that 0.03 mass% of a crystal nucleating agent "Irgaclear" (registered trademark) XT386 (manufactured by BASF Japan Ltd.) was added to the resin of the first component used in Example 3, and that the nozzle temperature and the air temperature were changed to 285°C and 310°C, respectively.

The obtained electret nonwoven fabric was subjected to the measurement of characteristic values. The obtained results are shown in Table 1.

[Comparative Example 1]

An electret nonwoven fabric was obtained in the same manner as in Example 1 except that only the resin of the first component used in Example 1 was charged into both the first and second extruders.

The obtained electret nonwoven fabric was subjected to the measurement of characteristic values. The obtained results are shown in Table 1.

[Comparative Example 2]

An electret nonwoven fabric was obtained in the same manner as in Example 1 except that only the resin of the second component used in Example 1 was charged into both the first and second extruders.

The obtained electret nonwoven fabric was subjected to the measurement of characteristic values. The obtained results are shown in Table 1.

[Comparative Example 3]

An electret nonwoven fabric was obtained in the same manner as in Example 1 except that only the resin of the first component used in Example 1 was charged into the first extruder, and that a single fiber spinneret was used.
The obtained electret nonwoven fabric was subjected to the measurement of characteristic values. The obtained results are shown in Table 1.

[Comparative Example 4]

An electret nonwoven fabric was obtained in the same manner as in Comparative Example 3 except that only the resin of the second component used in Comparative Example 3 was charged into the first extruder.
The obtained electret nonwoven fabric was subjected to the measurement of characteristic values. The obtained results are shown in Table 1.

[Comparative Example 5]

An electret nonwoven fabric was obtained in the same manner as in Example 1 except that a polyethylene terephthalate resin was used as the resin of the second component used in Example 1, that the first component and the second component were discharged at a mass ratio of 7 : 3, and that the nozzle temperature and the air temperature were adjusted to 295°C and 320°C, respectively.
The obtained electret nonwoven fabric was subjected to the measurement of characteristic values. The obtained results are shown in Table 1.

[Table 1-1]

| Level | | Example 1 | Example 2 | Example 3 | Example 4 |
|---|---|---|---|---|---|
| First component | Type of raw material | PP | PP | PP | PP |
| | Name of crystal nucleating agent | - | - | - | Irgaclear XT386 |
| | Rate of added nucleating agent (mass%) | 0 | 0 | 0 | 0.01 |
| | Crystallization start temperature (°C) | 119 | 119 | 119 | 129 |
| Second component | Type of raw material | PP | PP | PP | PP |
| | Name of crystal nucleating agent | Irgaclear XT 386 | Irgaclear XT 386 | NA-21 | NA-21 |
| | Rate of added nucleating agent (mass%) | 0.03 | 0.03 | 0.3 | 0.3 |
| | Crystallization start temperature (°C) | 133 | 133 | 135 | 135 |
| Production method | | melt blowing | melt blowing | melt blowing | melt blowing |
| Spinneret | | side-by-side | side-by-side | side-by-side | side-by-side |
| Mass ratio | first component : second component | 8 : 2 | 2 : 8 | 8 : 2 | 8 : 2 |
| Nozzle temperature of spinneret (°C) | | 275 | 275 | 275 | 285 |
| Hot air | Temperature (°C) | 300 | 300 | 300 | 310 |
| | Pressure (MPa) | 0.16 | 0.16 | 0.16 | 0.16 |

(continued)

| Level | | Example 1 | Example 2 | Example 3 | Example 4 |
|---|---|---|---|---|---|
| Physical properties | Basis weight (g/m$^2$) | 25 | 25 | 25 | 25 |
| | Average fiber diameter ($\mu$m) | 2.0 | 2.1 | 2.0 | 2.0 |
| | Air permeability (cc/cm$^2$/sec) | 20.5 | 21.3 | 20.2 | 20.1 |
| | Tensile strength (N/5 cm) | 11.3 | 9.8 | 12.0 | 11.0 |
| | Collection efficiency (%) | 99.991 | 99.988 | 99.985 | 99.989 |

[Table 1-2]

| | Level | Comparative Example 1 | Comparative Example 2 | Comparative Example 3 | Comparative Example 4 | Comparative Example 5 |
|---|---|---|---|---|---|---|
| First component | Type of raw material | PP | - | PP | - | PP |
| | Name of crystal nucleating agent | - | - | - | - | - |
| | Rate of added nucleating agent (mass%) | 0 | - | 0 | - | 0 |
| | Crystallization start temperature (°C) | 119 | - | 119 | - | 119 |
| Second component | Type of raw material | - | PP | - | PP | PET |
| | Name of crystal nucleating agent | - | Irgaclear XT 386 | - | Irgaclear XT 386 | - |
| | Rate of added nucleating agent (mass%) | - | 0.03 | - | 0.03 | - |
| | Crystallization start temperature (°C) | - | 133 | - | 133 | 161 |
| Production method | | melt blowing | melt blowing | melt blowing | melt blowing | melt blowing |
| Spinneret | | side-by-side | side-by-side | single fiber | single fiber | side-by-side |
| Mass ratio | first component : second component | - | - | - | - | 7 : 3 |
| Nozzle temperature of spinneret (°C) | | 275 | 275 | 275 | 275 | 295 |
| Hot air | Temperature (°C) | 300 | 300 | 300 | 300 | 320 |
| | Pressure (MPa) | 0.16 | 0.16 | 0.16 | 0.16 | 0.16 |

(continued)

| | Level | Comparative Example 1 | Comparative Example 2 | Comparative Example 3 | Comparative Example 4 | Comparative Example 5 |
|---|---|---|---|---|---|---|
| Physical properties | Basis weight (g/m$^2$) | 25 | 25 | 25 | 25 | 30 |
| | Average fiber diameter ($\mu$m) | 2.0 | 2.0 | 2.0 | 2.1 | 2.9 |
| | Air permeability (cc/cm$^2$/sec) | 17.7 | 21.0 | 17.5 | 21.1 | 24.1 |
| | Tensile strength (N/5 cm) | 15.5 | 4.5 | 15.8 | 4.4 | 14.4 |
| | Collection efficiency (%) | 99.952 | 99.990 | 99.960 | 99.990 | 99.320 |

As is clear from Table 1, it can be understood that the nonwoven fabrics of Examples 1 to 4 of the present invention have a high air permeability while maintaining a high tensile strength.

In contrast, the melt-blown nonwoven fabrics of Comparative Examples 1 and 3, which contain only components containing no crystal nucleating agent, have a tensile strength comparable to those of the melt-blown nonwoven fabrics of Examples 1 to 4 and the spunbonded nonwoven fabric of Reference Example 5, but have a lower air permeability compared to those fabrics. In addition, the melt-blown nonwoven fabrics of Comparative Examples 2 and 4, which contain only components containing a crystal nucleating agent, have an air permeability comparable to those of the melt-blown nonwoven fabrics of Examples 1 to 4, but have an extremely low tensile strength and cannot withstand practical use.

Further, the melt-blown nonwoven fabric of Comparative Example 5 containing a main component other than the polypropylene resin has a high air permeability while maintaining a high tensile strength, but has a lower collection efficiency than those of the melt-blown nonwoven fabrics of Examples 1 to 4.

(Spunbonded nonwoven fabric - which does not illustrate the present invention)

[Reference Example 5]

An electret nonwoven fabric was obtained in the same manner as in Example 1 except that the fibers were spun at a nozzle temperature of 235°C by a spunbond method using a side-by-side spinneret.

The obtained electret nonwoven fabric was subjected to the measurement of characteristic values. The obtained results are shown in Table 2.

[Comparative Example 6]

An electret nonwoven fabric was obtained in the same manner as in Example 5 except that only the resin of the first component used in Example 5 was charged into the first extruder, and that a single fiber spinneret was used.

The obtained electret nonwoven fabric was subjected to the measurement of characteristic values. The obtained results are shown in Table 2.

[Table 2]

| | Level | Example 5 | Comparative Example 6 |
|---|---|---|---|
| First component | Type of raw material | PP | PP |
| | Name of crystal nucleating agent | - | - |
| | Rate of added nucleating agent (mass%) | 0 | 0 |
| | Crystallization start temperature (°C) | 119 | 119 |

(continued)

| Level | | Example 5 | Comparative Example 6 |
|---|---|---|---|
| Second component | Type of raw material | PP | - |
| | Name of crystal nucleating agent | Irgaclear XT 386 | - |
| | Rate cf added nucleating agent (mass%) | 0.03 | - |
| | Crystallization start temperature(°C) | 133 | - |
| Production method | | spunbond | spunbond |
| Spinneret | | side-by-side | single fiber |
| Mass ratio | first component : second component | 8 : 2 | - |
| Nozzle temperature of spinneret (°C) | | 235 | 235 |
| Hot air | Temperature(°C) | - | - |
| | Pressure (MPa) | - | - |
| Physical properties | Basis weight (g/m$^2$) | 25 | 25 |
| | Average fiber diameter ($\mu$m) | 13.3 | 13.1 |
| | Air permeability (cc/cm$^2$/sec) | 273 | 251 |
| | Tensile strength (N/5 cm) | 51.8 | 54.4 |
| | Collection efficiency | 49.478 | 47.292 |

As is clear from Table 2, the nonwoven fabric of Reference Example 5 has a higher collection efficiency than that of Comparative Example 6 containing only a component containing no crystal nucleating agent, and has a high air permeability while maintaining a high tensile strength.

As described above, in the present invention, an electret nonwoven fabric having high collection efficiency and low pressure loss and further having high strength can be obtained by arranging, at the fiber surface, the components having a difference in crystallization temperature of 5°C or more.

DESCRIPTION OF REFERENCE SIGNS

1:   Sample holder
2:   Dust storage box
3:   Flow meter
4:   Flow control valve
5:   Blower
6:   Particle counter
7:   Switching cock
8:   Pressure gauge
M:   Measurement sample

**Claims**

1.  A nonwoven fabric, which is a melt-blown nonwoven fabric, the nonwoven fabric comprising a constituent fiber containing a thermoplastic resin, the constituent fiber containing at least a first component and a second component,

    either one or both of the first component and the second component containing a crystal nucleating agent,
    the first component and the second component having a difference in crystallization start temperature of 5°C or more as measured by the method described in the specification,
    at least part of both the first component and the second component being exposed to a surface of the constituent fiber.

2. The nonwoven fabric according to claim 1, wherein at least one of the first component and the second component contains polypropylene as a main component.

3. The nonwoven fabric according to claim 1 or 2, wherein both the first component and the second component contain polypropylene as a main component.

4. The nonwoven fabric according to any one of claims 1 to 3, wherein the first component and the second component contain identical polypropylene as a main component.

5. The nonwoven fabric according to any one of claims 1 to 4, having a concentration of the crystal nucleating agent contained in the first component or the second component of 0.001 to 1 wt%.

6. The nonwoven fabric according to any one of claims 1 to 5, which is electret-treated.

7. An air filter material comprising the nonwoven fabric according to any one of claims 1 to 6.


**Patentansprüche**

1. Vliesstoff, der ein schmelzgeblasener Vliesstoff ist, wobei der Vliesstoff einen Faserbestandteil umfasst, der ein thermoplastisches Harz enthält, wobei der Faserbestandteil zumindest eine erste Komponente und eine zweite Komponente enthält,

   wobei entweder eine oder beide der ersten Komponente und der zweiten Komponente einen Kristallkeimbildner enthalten,
   wobei die erste Komponente und die zweite Komponente eine durch das in der Beschreibung beschriebene Verfahren gemessene Differenz der Kristallisationsbeginn-Temperatur von 5 °C oder mehr aufweisen,
   wobei zumindest ein Teil von sowohl der ersten Komponente als auch der zweiten Komponente auf einer Oberfläche des Faserbestandteils freiliegen.

2. Vliesstoff nach Anspruch 1, wobei zumindest eine aus der ersten Komponente und der zweiten Komponente Polypropylen als Hauptkomponente enthält.

3. Vliesstoff nach Anspruch 1 oder 2, wobei sowohl die erste Komponente als auch die zweite Komponente Polypropylen als Hauptkomponente enthalten.

4. Vliesstoff nach einem der Ansprüche 1 bis 3, wobei die erste Komponente und die zweite Komponente identisches Polypropylen als Hauptkomponente enthalten.

5. Vliesstoff nach einem der Ansprüche 1 bis 4, der eine Konzentration des in der ersten Komponente oder der zweiten Komponente enthaltenen Kristallkeimbildners von 0,001 bis 1 Gew.-% aufweist.

6. Vliesstoff nach einem der Ansprüche 1 bis 5, der Elektret-behandelt ist.

7. Luftfiltermaterial, das einen Vliesstoff nach einem der Ansprüche 1 bis 6 umfasst.


**Revendications**

1. Tissu non tissé, qui est un tissu non tissé soufflé à l'état fondu, le tissu non tissé comprenant une fibre constitutive contenant une résine thermoplastique, la fibre constitutive contenant au moins un premier composant et un second composant,

   l'un du premier composant et du second composant, ou les deux, contenant un agent de nucléation cristalline,
   le premier composant et le second composant ayant une différence de température de début de cristallisation de 5°C ou plus telle que mesurée par le procédé décrit dans la description,
   au moins une partie à la fois du premier composant et du second composant étant exposée à une surface de la fibre constitutive.

**2.** Tissu non tissé selon la revendication 1, dans lequel au moins l'un du premier composant et du second composant contient du polypropylène en tant que composant principal.

**3.** Tissu non tissé selon la revendication 1 ou 2, dans lequel à la fois le premier composant et le second composant contiennent du polypropylène en tant que composant principal.

**4.** Tissu non tissé selon l'une quelconque des revendications 1 à 3, dans lequel le premier composant et le second composant contiennent du polypropylène identique en tant que composant principal.

**5.** Tissu non tissé selon l'une quelconque des revendications 1 à 4, présentant une concentration de l'agent de nucléation cristalline contenu dans le premier composant ou le second composant de 0,001 à 1 % en poids.

**6.** Tissu non tissé selon l'une quelconque des revendications 1 à 5, qui est traité par électret.

**7.** Matériau de filtre à air comprenant le tissu non tissé selon l'une quelconque des revendications 1 à 6.

【FIG 1】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61289177 A
- US 6119691 A
- JP 2003003367 A
- JP 63280408 A
- JP 10046460 A
- JP 2006037295 A

- WO 2015141750 A
- JP H05209354 A
- US 5811045 A
- EP 140341 A
- WO 0000267 A
- JP 2004082109 A